# EUROPÄISCHE PATENTSCHRIFT

(11) **EP 0 499 057 B1**
(45) Veröffentlichungstag und Bekanntmachung des Hinweises auf die Patenterteilung: **14.08.1996**
(21) Anmeldenummer: 92100977.5
(22) Anmeldetag: 22.01.1992
(51) Int. Cl.: A47J 45/08, A47J 27/092

(54) **Griff für einen Kochtopf**
Handle of a cooking vessel
Manche d'un récipient de cuisson

(30) Priorität: 14.02.1991 DE 9101709 U
(43) Veröffentlichungstag der Anmeldung: 19.08.1992
(73) Patentinhaber: Heinrich Baumgarten KG Spezialfabrik für Beschlagteile, D-57277 Neunkirchen (DE)
(72) Erfinder: Fischbach, Wolfgang, W-5244 Daaden (DE)
(74) Vertreter: Missling, Arne, Dipl.-Ing.

(56) Entgegenhaltungen:
- EP-A- 0 148 464
- FR-A- 335 111
- FR-A- 523 895
- GB-A- 610 605
- US-A- 1 482 305

## Beschreibung

Die Erfindung bezieht sich auf einen Griff nach dem Oberbegriff des Anspruches 1.

Bei Kochgeschirren besteht stets das Problem, daß die Griffelemente so ausgebildet sein müssen, daß sie bei der Benutzung des Kochgeschirrs eine niedrigere Temperatur aufweisen als der Topf bzw. das Kochgschirr selbst. Bei üblichen Kochgeschirren kann dies durch entsprechende Materialauswahl des Griffelementes erfolgen, so ist es beispielsweise bekannt, Griffelemente aus Kunststoff zu fertigen, wobei die wärmeisolierenden Eigenschaften des Kunststoffes gewährleisten, daß das Griffelement eine bestimmte, von der Bedienungsperson ertragbare Temperatur nicht überschreitet.

Die Lösung des Problems der Wärmeisolierung wirft somit bei normalen Kochgeschirren vom Grundsatz her keine besonderen Schwierigkeiten auf.

Eine gänzlich andere Betrachtungsweise muß bei Dampfdruckkochtöpfen angestellt werden. Durch die dort vorliegenden höheren Drücke und Temperaturen besteht eine weitaus größere Verletzungsgefahr (Verbrennungsgefahr) für den Benutzer, als bei normalen Kochgeschirren. Weiterhin kommt erschwerend hinzu, daß die modernen Griffelemente von Dampfdruckkochtöpfen mehrere Funktionen vereinigen, nämlich zum einen eine Einhandbedienung des Kochtopfes ermöglichen sollen, so daß der Kochtopf mit einer Hand gehalten werden kann, während gleichzeitig eine Verriegelungs- sowie Druckausgleichsfunktion vorliegen muß. Mit letzterer Funktion ist es möglich, den Deckel an dem Kochtopf in einer Betriebsstellung zu verriegeln und gleichzeitig das Sicherheitsventil so zu betätigen, daß dieses nach dem Ankochvorgang geschlossen werden kann. Weiterhin muß sichergestellt werden, daß der Dampfdruckkochtopf nach Beendigung des Kochvorganges mittels des Sicherheitsventils entlüftet werden kann, so daß ein Druckausgleich zwischen dem Innenraum des Kochtopfs und der Umgebung stattfindet. All diese Funktionen erfordern einen sehr komplexen Aufbau des Griffelementes, so daß die aus dem Stand der Technik bekannten einfachen Lösungsmöglichkeiten bei derartigen Dampfdruckkochtöpfen gänzlich ausscheiden.

Zur Lösung der oben beschriebenen Problematik wurden bisher Griffelemente aus Kunststoff verwendet, so wie sie beispielsweise in der EP-B1-148 464 beschrieben sind. Derartige Griffelemente eignen sich prinzipiell zur Gewährleistung der technischen Funktionen, sie weisen jedoch auch erhebliche Nachteile auf. Ein wesentlicher Nachteil besteht darin, daß der Kunststoff des Griffelementes nur bestimmte Temperaturen verträgt, so daß z. B. ein Einstellen des Kochtopfes in einen Backofen ausscheidet, da durch eine hohe Temperatureinwirkung das Kunststoffmaterial des Griffelementes durch Alterung zerstört würde. Ein weiterer, wesentlicher Nachteil liegt darin, daß die Kunststoffmaterialien nicht zum dauerhaften Einsatz in Geschirrspülmaschinen geeignet sind, da durch die aggressiven Reinigungsmittel der Geschirrspülmaschinen erhebliche Beschädigungen der Kunststoff-Griffelemente zu befürchten sind. Insbesondere bei Dampfdruckkochtöpfen stellt dieses einen besonderen Problemkreis dar, da das Griffelement sowohl das Sicherheitsventil als auch den Betätigungsknopf umfaßt. Bereits geringste Formänderungen des Kunststoff-Griffelementes können somit zu Fehlfunktionen des Sicherheitsventils bzw. des Betätigungsknopfes führen. Aufgrund der hohen Drücke, welche sich in einem Dampfdruckkochtopf aufbauen können, ist somit die Verwendung von Kunststoffmaterialien sehr kritisch, da die Sicherheit der Bedienungsperson nicht gewährleistet werden kann.

Der Erfindung liegt die Aufgabe zugrunde, einen Griff der eingangs genannten Art zu schaffen, welcher bei einfachem Aufbau, einfacher Herstellbarkeit und hoher Betriebssicherheit die Nachteile des Standes der Technik vermeidet und eine ausreichend niedrige Temperatur des Griffbereiches beim Betrieb des Kochtopfes ermöglicht.

Die Aufgabe wird erfindungsgemäß mit den Merkmalen des Anspruches 1 gelöst.

Der erfindungsgemäße Griff zeichnet sich durch eine Reihe erheblicher Vorteile aus. Da die Griffelemente gänzlich aus Metall gefertigt sind, sind diese resistent gegen die üblichen Reinigungsmittel, welche in einer Geschirrspülmaschine verwendet werden. Der Kochtopf kann somit problemlos beliebig oft in einer Geschirrspülmaschine gereinigt werden. Weiterhin gestattet die metallische Ausgestaltung des Griffelementes das Einsetzen des Kochtopfes in einen Ofen, da auch bei sehr hohen Temperaturen, beispielsweise beim Grillen zum Zwecke des Überbackens keine Beschädigung des Griffelementes auftritt, so wie dies bei Kunststoff-Griffelementen der Fall ist. Der metallische Aufbau des Griffelementes ermöglicht weiterhin eine formgenaue und präzise Fertigung, so daß das Sicherheitsventil und der Betätigungsknopf, welche üblicherweise bei Griffelementen von Dampfdruckkochtöpfen vorgesehen sind, ohne weitere Probleme untergebracht werden können. Da Deformationen des Griffelementes, wie sie bei höheren Temperaturen bei Kunststoffteilen auftreten können, ausgeschlossen sind, ist ein Höchstmaß an Betriebssicherheit gewährleistet. Der verminderte Querschnitt des Griffelementes zwischen dem Griffbereich und dem Befestigungsbereich führt zu einer Verringerung der vom Kochtopf auf den Griffbereich übergeleiteten Wärmemenge, da dieser verminderte Querschnittsbereich als Widerstand bei der Wärmeleitung wirkt.

Erfindungsgemäß ist vorgesehen, daß das Griffelement als Hohlkörper ausgebildet ist.

Es sind mehrere zueinander parallele Aussparungen vorgesehen, wobei hierdurch der für die Wärmeleitung wirksame Querschnitt ohne Beeinträchtigung der Festigkeit des Griffelementes vermindert ist.

Der erfindungsgemäße Griff ist aus zwei Griffelementen gebildet, welche als Unterstiel an einem Kochtopf und als Oberstiel am Deckel eines Kochtopfes befestigbar sind. Somit kann des erfindungsgemäße Griffelement in üblicher Weise bei einem mittels einer Hand bedienbaren Dampfdruckkochtopf Verwendung finden. Der Oberstiel umfaßt dabei am Befestigungsbereich das Sicherheitsventil, angrenzend an den Übergangsbereich kann der Oberstiel mit einem Betätigungsknopf versehen sein, welcher dazu dient, das Sicherheitsventil in eine Entlüftungs- bzw. Kochstellung zu bringen und zugleich den Deckel auf dem Kochtopf zu verriegeln.

Da bei der Entlüftung des Dampfdruckkochtopfes nach Beendigung des Kochvorganges durch das Sicherheitsventil erhebliche Dampfmengen abgeleitet werden müssen, besteht stets die Gefahr, daß dieser Dampf das Griffelement in unzulässiger Weise erwärmt. Um dies auszuschließen, ist erfindungsgemäß vorgesehen, daß im Innenraum des Oberstiels zwischen dem Befestigungsbereich und dem Übergangsbereich eine Querwandung eingesetzt ist. Diese Querwandung verhindert, daß möglicherweise aus dem Sicherheitsventil austretender Dampf in den Innenraum des Griffelementes, insbesondere des Griffbereiches strömt.

Erfindungsgemäß ist es weiterhin möglich, auch den Befestigungsknopf aus Metall zu fertigen, so daß das Griffelement insgesamt keine Kunststoff-Bedienungsteile aufweist. Da sich der Betätigungsknopf im Griffbereich befindet, ist dieser auch der erfindungsgemäß vorgesehenen Kühlung unterworfen.

In einer besonders günstigen Ausgestaltung der Erfindung kann das Griffelement einen im wesentlichen rechteckigen Querschnitt aufweisen, wobei sich die Aussparung (EN) im wesentlichen über die gesamte Seitenfläche des Griffelementes erstreckt. Das Griffelement kann somit aus einem Blech-Material durch Ausstanzen und Abkanten gefertigt werden, wobei das Blechmaterial an das Material des Kochtopfes angepaßt werden kann, so daß das Griffelement beispielsweise, wie der Kochtopf, aus nichtrostendem Edelstahl bestehen kann.

In der praktischen Erprobung des erfindungsgemäßen Griffes an einem Dampfdruckkochtopf hat sich herausgestellt, daß der Griffbereich anschließend an den Übergangsbereich bei einer 30-minütigen Kochzeit mit einer 2/3-Füllung des Dampfdruckkochtopfes eine handwarme Temperatur aufweist. Die Gefahr einer Verbrennung oder Verletzung der Bedienungsperson ist somit gänzlich auszuschließen, da die maximale Temperatur im Griffbereich deutlich unter der zulässigen Temperatur gemäß DIN liegt.

Im folgenden wird die Erfindung anhand eines Ausführungsbeispiels in Verbindung mit der Zeichnung beschrieben. Dabei zeigt:
Fig. 1 eine Seitenansicht eines erfindungsgemäßen Ausgestaltungsbeispiels des Griffes in Verbindung mit einem Dampfdruckkochtopf, und
Fig. 2 eine Seiten-Schnittansicht des oberen Bereiches des Ausführungsbeispieles gemäß Fig. 1.

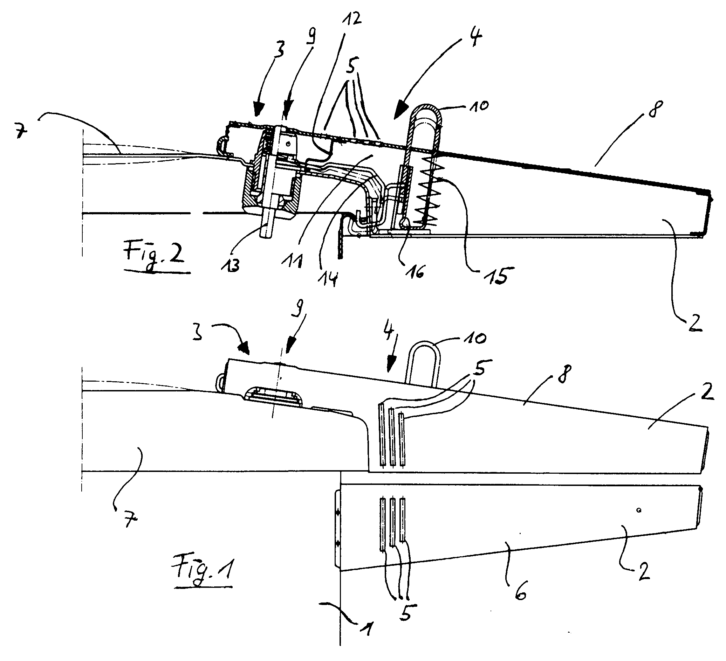

In den Fig. 1 und 2 ist ein Kochtopf 1 dargestellt, welcher mit einem Unterstiel 6 verbunden ist. Dem Kochtopf ist ein Deckel 7 zugeordnet, an dem ein Oberstiel 8 befestigt ist. Der Kochtopf 1 ist in Form eines Dampfdruckkochtopfes ausgebildet, im Bereich des Deckels 7 ist in üblicher Weise ein Sicherheitsventil 9 vorgesehen, welches, wie aus dem Stand der Technik ebenfalls bekannt, mittels eines Betätigungsknopfes 10 betätigbar ist. Das Sicherheitsventil 9 ist so ausgebildet, wie dies durch die entsprechenden Vorschriften und DIN-Normen gefordert ist. Es umfaßt u.a. einen längsverschiebbaren Kochanzeiger 13. Weiterhin ist das Ventil mit einem Bügel 14 betriebsverbunden, welcher mittels des Betätigungsknopfes 10, wie in Fig. 2 gezeigt, zwischen zwei Betriebsstellungen bewegbar ist. Der Bügel 14 dient dazu, den Ventilkörper des Sicherheitsventils 9 wahlweise in zumindest eine Entlüftungsstellung sowie in eine schließende Kochstellung zu bringen. Weiterhin wird der Deckel 7 mittels des Bügels 14 so verriegelt, daß ein unbeabsichtigtes Öffnen während des Kochvorganges verhindert wird. Auf eine detaillierte Beschreibung des Sicherheitsventiles wird an dieser Stelle verzichtet, da dies aus dem Stand der Technik bekannt ist. Weiterhin ist ein üblicherweise an dem Deckel vorgesehenes Sicherheits-Druckventil ebenso wenig dargestellt, wie die Dichtung zwischen dem Kochtopf 1 und dem Deckel 7.

Erfindungsgemäß umfaßt das Griffelement jeweils einen Griffbereich 2 sowie einen Befestigungsbereich 3. Der Befestigungsbereich dient dazu, das Griffelement entweder an dem Kochtopf 1 oder an dem Deckel 7 zu verankern. Dies geschieht in üblicher, aus dem Stand der Technik bekannter Weise, beispielsweise durch Verschweißen, Verschrauben o.ä.. Zwischen dem Griffbereich 2 und dem Befestigungsbereich 3 ist ein Übergangsbereich 4 vorgesehen, welcher erfindungsgemäß einen verminderten Querschnitt aufweist. Dies wird durch mehrere parallel zueinander angeordnete Aussparungen 5 erreicht, welche insbesondere in Fig. 1 deutlich sichtbar sind. Das Ausführungsbeispiel zeigt ein Griffelement, welches einen im wesentlichen rechteckigen Querschnitt aufweist. Die Aussparungen 5 sind an jeder der Seitenflächen des rechteckigen Querschnitts angebracht, d.h. sowohl an der Oberseite (siehe Fig. 2) als auch an den Seitenflächen und (nicht dargestellt) an der Unterfläche. Um zu verhindern, daß Dampf, welcher beim Entlüften aus dem Sicherheitsventil 9 austreten kann, in den Innenraum 11 des Griffelementes eintritt, ist angrenzend an den Übergangsbereich 4 eine Querwandung 12 vorgesehen (siehe Fig. 2), welche als Dampfsperre wirkt.

Der Betätigungsknopf 10 ist in Form eines metallischen, U-förmigen Bügels ausgebildet, welcher mittels einer Feder 15 vorgespannt ist und in einer Führung 16 verschiebbar gehaltert ist. Ein innenliegender Bereich des Betätigungsknopfes 10 ist mit dem Bügel 14 betriebsverbunden.

Die gezeigte Ausgestaltungsform des Griffes gewährleistet, daß der Griffbereich 2 auch bei längerem Betrieb des Dampfdruckkochtopfes eine niedrige, nicht zu Verletzungen führende Temperatur aufweist, weiterhin ist der Griff gegen Beschädigungen mechanischer, physikalischer oder chemischer Art geschützt, da er gänzlich aus Metall gefertigt ist.

## Patentansprüche

1. Griff für einen Dampfdruckkochtopf bestehend aus zwei einen Oberstiel (8) und einen Unterstiel (6) bildende Griffelementen (6, 8), von denen der Oberstiel (8) am Deckel und der Unterstiel (6) am Topf des Dampfdruckkochtopfes (1) befestigbar ist, mit je einem mit der Hand greifbaren Griffbereich (2) und einem Befestigungsbereich (3), dadurch gekennzeichnet, daß das Griffelement (6, 8) als Hohlkörper aus Metall gefertigt ist, daß das Griffelement (6, 8) am Übergangsbereich zwischen dem Griffbereich (2) und dem Befestigungsbereich (3) an seinen Seitenflächen und Deckenflächen eine Querschnittsverminderung durch mehrere quer zur Längsachse des Griffelementes (6, 8) sich erstreckende und zueinander parallele Aussparungen (5) aufweist, die in Richtung des Wärmeflusses hintereinander liegend ausgebildet sind, daß im Innenraum (11) des Oberstiels (8) zwischen dessen Befestigungsbereich (3) und dessen Übergangsbereich (4) eine Querwandung (12) eingesetzt ist und daß in dessem Innenraum (11) ein Sicherheitsventil (9) und dessen Befestigungselemente (14) angeordnet sind.

2. Griff nach Anspruch 1, dadurch gekennzeichnet, daß der Oberstiel (8) angrenzend an dem Übergangsbereich (4) mit einem Betätigungsknopf (10) versehen ist.

3. Griff nach einem der Ansprüche 1 oder 2, dadurch gekennzeichnet, daß der Betätigungsknopf (10) aus Metall gefertigt ist.

4. Griff nach einem der Ansprüche 1 bis 3, dadurch gekennzeichnet, daß das Griffelement (6, 8) einen im wesentlichen rechteckigen Querschnitt aufweist und daß sich die Aussparung (5) im wesentlichen über die gesamte Seitenfläche des Griffelementes (6, 8) erstreckt.

## Claims

1. A handle for a pressure cooker, comprising two gripping members (6, 8) forming an upper stem (8) and a lower stem (6), the upper stem (8) being fixable to the lid and the lower stem (6) being fixable to the pan of the pressure cooker (1), and each having a gripping region (2), which can be gripped by the hand, and a fixing region (3), characterised in that the gripping member (6, 8) is formed as a hollow body made of metal, in that the gripping member (6, 8) has an area of reduced cross-section on its side surfaces and upper surfaces in the transition region between the gripping region (2) and the fixing region (3) owing to a plurality of parallel recesses (5) extending transversely to the longitudinal axis of the gripping member (6, 8) and located one behind another in the direction of the heat flow, in that a transverse wall (12) is inserted into the interior (11) of the upper stem (8) between its fixing region (3) and its transition region (4) and in that a safety valve (9) and fixing members (14) therefor are arranged in its interior (11).

2. A handle according to claim 1, characterised in that the upper stem (8) is provided with an operating knob (10) adjacent the transition region (4).

3. A handle according to either one of claims 1 and 2, characterised in that the operating knob (10) is made of metal.

4. A handle according to any one of claims 1 to 3, characterised in that the gripping member (6, 8) has a substantially rectangular cross-section and in that the recess (5) extends substantially over the entire side surface of the gripping member (6, 8).

## Revendications

1. Manche pour un récipient de cuisson sous pression de vapeur, constitué de deux éléments de poignée (6, 8) formant un manche supérieur (8) et un manche inférieur (6), dont le manche supérieur (8) peut être fixé sur le couvercle et le manche inférieur (6) sur le pot du récipient de cuisson sous pression de vapeur (1), comportant chacun une zone de saisie (2) pouvant être saisie à la main et une zone de fixation (3),
caractérisé en ce que l'élément de poignée (6, 8) est réalisé sous la forme d'un corps creux en métal,
en ce que l'élément de poignée (6, 8) présente, dans la zone de transition entre la zone de saisie (2) et la zone de fixation (3), sur ses surfaces latérales et sur ses surfaces de recouvrement, une réduction de sa section constitué par plusieurs encoches (5) parallèles entre elles, dirigées perpendiculairement à l'axe longitudinal de l'élément de poignée (6, 8), ces encoches (5) étant réalisées les unes derrière les autres dans la direction du flux thermique,
en ce que, dans le volume intérieur (11) du manche supérieur (8), entre sa zone de fixation (3) et sa zone de transition (4), est implantée une paroi transversale (12),
et en ce que, dans ce volume intérieur (11) sont disposés une soupape de sécurité (9) et ses éléments de fixation (14).

2. Manche suivant la revendication 1, caractérisé en ce que le manche supérieur (8) est muni d'un poussoir d'actionnement (10) en limite de la zone de transition (4).

3. Manche suivant la revendication 1 ou la revendication 2, caractérisé en ce que le poussoir d'actionnement (10) est réalisé en métal.

4. Manche suivant l'une des revendications 1 à 3, caractérisé en ce que l'élément de poignée (6, 8) présente une section essentiellement rectangulaire et en ce que l'encoche (5) s'étend essentiellement sur toute la surface latérale de l'élément de poignée (6, 8).
